# EUROPEAN PATENT APPLICATION

(11) **EP 3 671 442 A1**
(43) Date of publication of application: **24.06.2020**
(21) Application number: 18213240.7
(22) Date of filing: 17.12.2018
(51) Int. Cl.: G06F 9/448, G05B 19/05

(54) **SYSTEM AND METHOD FOR SWITCHING OPERATING STATES OF PHYSICAL DEVICES**

(71) Applicant: Physik Instrumente (PI) GmbH & Co. KG, 76228 Karlsruhe (DE)
(72) Inventor: Mark, Michael, 76131 Karlsruhe (DE); Lahakio, Gerald, 76228 Karlsruhe (DE); Caravagna, Marco, 76227 Karlsruhe (DE); Kotter, Reinhard, 83071 Stephanskirchen (DE)
(74) Representative: Bittner, Peter

(57) **Abstract**

A firmware and a computer-implemented method for switching operating states of a physical device where the transitions (122t) between a plurality of operating states (A, B) of the physical device are controlled by a finite state machine implemented by a container object (131) including a plurality of function units. Configurations (122A, 122B) define arrangements of function units (133a, 133b, 133c) to perform functions in accordance with a particular operating state (A, B) associated with the respective configuration (122A, 122B). A trigger event (211t) is received to switch from a first operating state (A) into a second operating state (B). The switching occurs within a single control loop cycle, by modifying the arrangement of one or more function unit instances associated with the first operating state (A) into a modified arrangement of one or more function unit instances associated with the second operating state (B).

## Description

### Technical Field

The present invention generally relates to electronic data processing, and more particularly, relates to methods, computer program products and systems for switching operating states of physical devices in real-time.

### Background

In the prior art of physical device control methods, typically a procedural control program is implemented in a control unit which reacts at run-time to real-world events with adjusting certain control parameters. This may require sophisticated and complex control circuits to control the process sequence performed by the physical device. Controlling the process sequence typically implies that the physical device is switched from a current operating state into a new operating state. As such controller implementations are typically of a static nature, a reconfiguration of the controller structure is difficult. If control algorithms implemented by the controller cannot be executed at run-time during the duration of a single control loop, the algorithms are typically split into portions which can be executed sequentially and the execution is then performed over two or more control loops. The splitting of algorithms increases the complexity of the controller and the execution of the control procedure even more. Further, a real-time adjustment of parameters becomes more difficult as the control procedure can only be executed over multiple control loops leading to a systematic delay when a control parameter is to be adjusted.

### Summary

There is therefore a need to provide systems and methods which reduce the complexity of a controller implementation while at the same time they improve the flexibility of the controller to switch between different operating states under real-time conditions.

The above technical problem is solved by embodiments of the invention according to the independent claims. In one embodiment, a computer-implemented method for switching operating states of a physical device is provided. Transitions between operating states of the physical device are controlled by a finite state machine implemented by a container object. The container object is an instance of a container unit (typically referred to as a container) which may be a class, a data structure, or an abstract data type whose instances are collections of other objects. In other words, container objects store further objects in an organized way that follows specific access rules. The size of a container object depends on the number of objects (elements) it contains. Underlying (inherited) implementations of various container types may vary in size and complexity, and provide flexibility in choosing an appropriate implementation for any given scenario. For example, in the case that the container unit is a class it may include a finite state machine class which defines the transitions being allowed between a plurality of operating states of the physical device.

The container object further includes a plurality of function units and configurations. Each configuration defines a particular arrangement of function units to perform functions in accordance with a particular operating state associated with the respective configuration. Thereby, a particular function unit implements an algorithm to process input data which are received via one or more input service parameters of the function unit. The computational result of the algorithm is then provided via corresponding one or more output service parameters of the function unit. In other words, a particular container object encapsulates a plurality of function units associated with a particular system task of the physical device. The function units are addressed via the respective container object. It is to be noted that a function unit is also a class, a data structure, or an abstract data type and that the container unit object actually includes instances of the function units. Such function unit instances need the container object to be addressed. However, for the sake of simplifying the language, the following description always refers to the term function unit. For a person skilled in the art it is clear that the term function unit inside a container object always relates to the respective instance of the corresponding class or abstract data type. The classes/data structures/abstract data types defining container units with configurations and function units may be stored in a library from where they are instantiated. When a container object is instantiated the included function units are also instantiated. However, the connections in accordance with the respective configurations are created / deleted dynamically while the physical device is being operated.

For each operating state the container object includes a corresponding configuration. A particular configuration defines how one or more of the function units of the container need to be arranged in order to perform the system function in accordance with the respective operating state. In other words, a configuration can be seen as a description of a connection diagram for the function units included in the configuration. A first configuration can include one or more function units which are processed in a given order in that a first function unit provides its output to the input of a second function unit and so on (or directly to the output of the container object). The function units arranged in the first configuration are connected in a way that they can perform a system function in accordance with a first operating state of the physical device. A second configuration may reuse some of the function units of the first configuration in a different order or it may include entirely different function units of the control object. The function units of the second configuration are arranged (connected) to perform a system function in accordance with the second operating state.

When the physical device is in operation it is always in a particular operating state in accordance with one of the corresponding configurations. The physical device may include or may be associated with one or more sensors reflecting the state of operation of the physical device. A change in one or more of the sensor signals may indicate a trigger event configured to the container object to switch the physical device from a first operating state into a second operating state. For example, a trigger event may be identified when a certain signal value exceeds a predefined threshold. More complex trigger events based on a combination of multiple signals can also be used. To identify a trigger event, for example, a rule based trigger component can be used which evaluates received signals in accordance with predefined rules.

Dependent on the received trigger event the container object now switches from the current (first) operating state to the second operating state by modifying the arrangement of one or more function unit instances associated with the first operating state into a modified arrangement of one or more function unit instances associated with the second operating state. The configurations of the container object are designed in such a way that this switch operation occurs within a single control loop cycle. In other words, once the trigger event is received, the second configuration is activated by connecting the respective function units and the respective algorithms are executed so that no discontinuity is introduced in the control signals which are already applied to the physical device. The switch operation is performed in that a first connection to a particular function unit instance is created if the configuration corresponding to the second operating state includes the first connection and the configuration corresponding to the first operating state does not include the first connection, and a second connection to a particular function unit is removed if the configuration corresponding to the first operating state includes the second connection and the configuration corresponding to the second operating state does not include the second connection. In other words, the connections between the function units of the current configuration are removed if they are not also part of the coming configuration and new connections between function units are created if required. Each function unit has a plurality of service parameters. A service parameter is a variable or a method of a class defined in a class interface. Creating a connection means that a function unit output service parameter connects to the address of an appropriate input service parameter of another function unit, or to the address of the output service of the container; or that the container input service connects to the address of an appropriate input service parameter of an appropriate function unit.

In one embodiment, multiple container objects can be connected where the output service of a first container is connected to the input service of a second container. In particular, the input service of the previously described container object may be connected to the output service of an input container object which includes function units configured to access respective hardware components to read input data for the container object. In other words, the input container object is used to collect the sensor (status) data monitoring the physical device operation and provides such data to the previously described container object. Further, the output service of the previously described container object may further be connected to the input service of an output container object with function units configured to access the physical device hardware to provide control data to the physical device.

A container object may also be a nested object comprising at least a further container object. That is, a hierarchy of container objects can be defined. For example, multiple system sub-functions of the physical device may be encapsulated by individual container objects which are children of a parent container object grouping such sub-functions into a superordinate function.

The modules configured to execute the computer-implemented methods disclosed herein can be implemented as modules of a firmware of a controller for controlling the physical device. In one embodiment, the firmware may further include a service broker. Each function unit and its service parameters may be registered with the service broker in an initialization step. Upon receipt of the trigger event and prior to switching operating states, a requesting function unit may send a request for a service delivery by a further function unit to the service broker. If the requested service is available and a plausible connection with the requesting function unit is possible (e.g., the requested service parameter is not already used by another connection and there is no type mismatch between the to-be-connected output-/input service parameters), the requesting function unit receives from the service broker the service address of the further function unit and can now connect to the further function unit via the received service address. If the plausibility check of the server fails the requesting function unit receives a respective error code from the service broker.

In one embodiment, a computer program product is provided which has instructions that, when loaded into a memory of a physical device controller and executed by at least one processor of the controller execute the method steps of the computer-implemented method according to any one of the previous claims.

In one embodiment, said firmware for switching operating states of a physical device includes a library of classes or abstract data types consisting of a plurality of container units with configurations and function units. An instance of a particular container unit (container object) includes a plurality of function units and configurations and implements a finite state machine configured to control the transitions between a plurality of operating states of the physical device. Each configuration corresponds to a respective operating state of the physical device and defines a particular arrangement of function units to perform control functions in accordance with the respective operating state.

The firmware includes an interface to receive a trigger event to switch the physical device from a first operating state into a second operating state. The trigger event may be in the format of raw sensor data which is evaluated by the firmware in accordance with predefined triggering rules to determine a target state, or it may include already preprocessed data in the format of an instruction to switch to a particular target state.

An execution engine of the firmware is configured to switch, within a single control loop cycle, in response to the trigger event, from the first operating state to the second operating state by modifying the arrangement of one or more function unit instances associated with the first operating state into a modified arrangement of one or more function unit instances associated with the second operating state. Thereby, a first connection to a particular function unit instance is created if the configuration corresponding to the second operating state includes the first connection and the configuration corresponding to the first operating state does not include the first connection, and a second connection to a particular function unit instance is removed if the configuration corresponding to the first operating state includes the second connection and the configuration corresponding to the second operating state does not include the second connection.

In one embodiment, a computing device is provided comprising the herein disclosed firmware wherein the physical device is a servomotor and the container object encapsulates function units in relation to axis control of the servomotor including at least a velocity control unit and a position control. The first operating state may be a velocity control state and the second operating state may be a position control state.

Further aspects of the invention will be realized and attained by means of the elements and combinations particularly depicted in the appended claims. It is to be understood that both the foregoing general description and the following detailed description are exemplary and explanatory only, and are not restrictive of the invention as described.

### Brief Description of the Drawings

FIG. 1A includes is a simplified block diagram including a firmware of a physical device controller to switch operating states of a physical device in accordance with an embodiment;
FIG. 1B includes a further simplified block diagram of a firmware with multiple container objects;
FIG. 2 is a simplified flow chart of a computer implemented-method for switching operating states of a physical device in accordance with an embodiment;
FIG. 3 illustrates the structure of a function unit;
FIG. 4 illustrates an example of a structure of a container object with multiple function units according to an embodiment;
FIG. 5 illustrates a class model of a container unit including a finite state machine;
FIG. 6 illustrates an application example of high precision control of an electrical motor according to an embodiment;
FIGs. 7A, 7B show measurement curves illustrating the real-time behavior of a physical device controller operated according to an embodiment;
FIGs. 8A, 8B, 8C illustrate a further application example of high precision control of a microscope according to an embodiment; and
FIG. 9 is a diagram that shows an example of a generic computer device and a generic mobile computer device, which may be used with the techniques described herein.

### Detailed Description

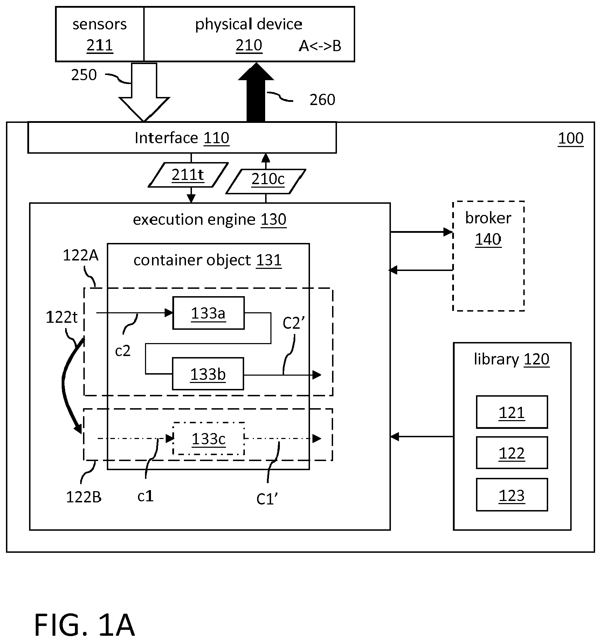

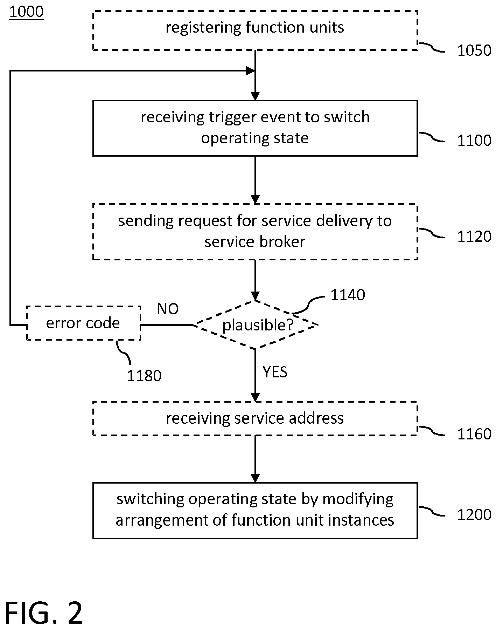

FIG. 1A includes is a simplified block diagram including a firmware 100 of a physical device controller (not shown) to switch operating states A, B of a physical device 210 in accordance with an embodiment. It is to be noted that the physical device itself may include an internal control unit which receives control signals from the physical device controller wherein the control signals originate from outputs of the firmware 100. FIG. 2 is a simplified flow chart of a computer implemented-method 1000 for switching operating states of the physical device in accordance with an embodiment. The firmware 100 will be described in view of the method 1000 illustrated in FIG. 2. Therefore, the following description refers to reference numbers of both figures accordingly.

The device controller is communicatively coupled with the physical device 210 in a way that bidirectional communication is possible between the device and its controller. Any appropriate communication protocol known in the art may be used to enable such communication.

The firmware 100 receives 1100 a trigger event 211t via an interface 110, wherein the trigger event includes information indicating that the physical device needs to be switched from a first operating state A into a second operating state B. The trigger event provides information about the current operating state of the physical device 210 which is indicative of a situation where the device needs to switch into a new state for proper future operation. Typically, the trigger events results from one or more sensor signals from one or more sensors 211 which are operated to monitor the physical device in its operation. The sensors 211 may be an integral part of the physical device 210 (e.g., an integrated temperature sensor, a vibration sensor, etc.) or they may be external sensors (e.g., measuring a distance between the device and an external reference location, a radiation sensor measuring light emission of the device, etc.). The trigger event may be a raw sensor signal, such as for example, a temperature value and the firmware 110 is configured to interpret this raw data as a trigger event when received 250 via the interface 110. For example, the interface 110 may perform a comparison of the received raw data with predefined threshold values which represent thresholds requiring the change of the current operating mode of the device by switching into a new operating state accordingly. Alternatively, intelligent sensors may have a data-preprocessing capability and may already convert the sensed raw data into a trigger event in the form of: switch from current state to state B. In this implementation, the sensors can autonomously perform the raw signal evaluation and provide the final trigger event 211t to the firmware 100. Trigger events may also depend on multiple sensor signals in which case it may be preferable to collect multiple raw sensor signals in the device controller and perform the evaluation for the detection of a state switch trigger with more complex rules. Such rules may take into account a plurality of sensor signals characterizing the current operating state of the device and leading to the firing of a corresponding trigger event 211t in accordance with the evaluation result. For example, a monitored speed value of a movable part of the physical device may still be below a given threshold indicating a critical situation. Further, the distance of the movable part to an obstacle may also be in the uncritical range. However, the entire situation may already have reached a critical state which is only detected by evaluating the combination of speed and distance values. In such a case a switch of the operating state may be necessary to reduce the speed of the movable part.

The firmware includes a library 120 of classes or abstract data types comprising a plurality of container units 121 with configurations 122 and function units 123. Instances of classes or abstract data types with regards to container units are referred to as objects herein. An instance of a particular container unit is referred to as container object. In the example, a container object 131 is instantiated from a respective class/abstract data type of the library 120. The container object 131 includes a plurality of function unit instances 133a, 133b, 133c and configurations 122A, 122B and implements a finite state machine configured to control the transitions 122t between a plurality of operating states A, B. Also the function unit instances 133a, 133b, 133c are instantiated from respective classes/abstract data types of the library 120. The configurations 122A, 122B (illustrated by dashed rectangles) are also defined in the library 120 and define different arrangements of the function unit instances 133a, 133b, 133c to perform functions in accordance with the respective operating states A, B.

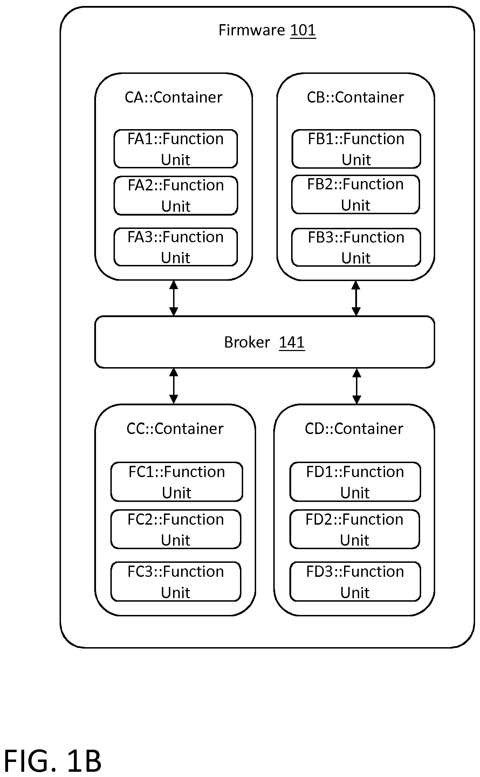

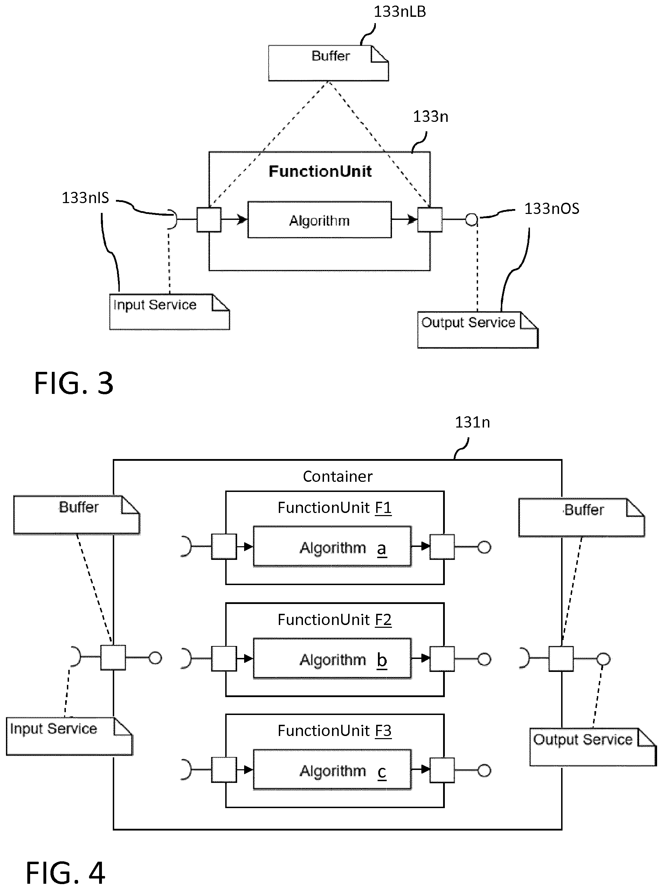

Turning briefly to FIG. 4 which illustrates an example of a structure of a container object 131n with multiple function units F1, F2, F3-. The container object 131n can receive input parameters via its Input Service. The input service is associated with a buffer. A buffer (of a particular function unit), as used herein, buffers the respective input/output service parameter value(s) which a calling function unit should read with the next call of the particular function unit. Also a corresponding output service may be buffered until the next call of the function unit. In other words, the buffers of input/output services guarantee that there are no leaps in the respective parameter values which could result from read-write conflicts. An input parameter can be routed to a function unit F1, F2, F3 in the container object dependent on the active configuration of the container object. For example, the configuration 122A in FIG. 1 has a connection c2 which routes the input parameter to function unit 133a. The configuration 122B has connection c1 routing the input parameter(s) to function unit 133c.

FIG. 3 illustrates the structure of a function unit instance 133n. Each function unit 133n implements an Algorithm (cf. FIG. 4, algorithms a, b, c implemented by F1, F2, F3, respectively) which can process the received input parameter(s) and generate an output result. Similar to a container object, each function unit instance 133n has an Input Service 133nIS to receive the input parameter(s), and has an Output Service 133nOS to provide the results delivered by the Algorithm. Again, the input and output services can be associated with buffers 133nLB.

Dependent on the active configuration of the container object the result (output) of a function unit may be provided as input parameter to a further function unit of the container object, or it may be provided to the Output Service of the container object as a container result parameter of the container object 131n. The first routing option is illustrated by configuration 122A of FIG. 1 where the output of function block 133a is connected to the input of function block 133b. The second routing option is illustrated by the connections c2', c1' of the outputs of function units 133b and 133c to the output service of the container object 131. As can be seen in FIG. 4, the Output Service is again associated with a buffer. The result may serve as input parameter to a further container object, or it may be provided 260 as a control parameter 210c to the physical device 210. The execution engine 130 can include multiple container objects which are connected via "Output Service-to- Input Service connections". At least one container object has a connection from its input service to the interface 110 to receive data from the sensors 211 and/or from the physical device 210 as input parameter(s). Further, at least one container object has a connection from its output service to the interface 110 to provide control parameter(s) to the physical device. For example, the container object 131 may be connected to an input container object accessing respective hardware components (e.g., physical device 210, sensors 211) to read input data for the container object. Further the container object 131 may be connected to an output container object accessing the physical device 210 hardware to provide control data 210c to the physical device.

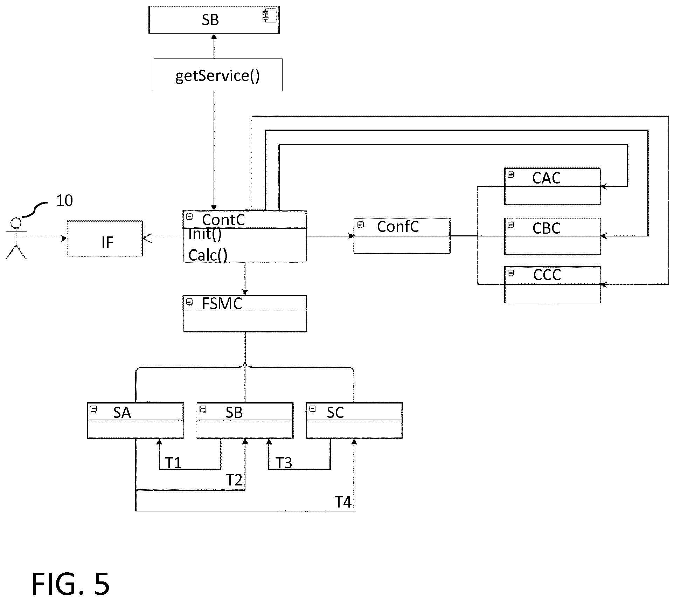

FIG. 5 illustrates a UML style class diagram for a container unit including more details about the finite state machine implemented by a container object (e.g., container object 131 in FIG. 1). A container class ContC is associated with one or more configuration classes ConfC, CAC, CBC, CCC. Thereby, CAC, CBC, CCC are subclasses of ConfC and represent the various configurations which correspond to respective operating states SA, SB, SC. A user or application 10 can interact with a container object via an interface IF. The interface IF is addressed by respective methods of the container class ContC (e.g., Init(), Calc(), etc.)

Further, ContC is associated with the Finite State Machine Class FSMC which defines the allowed transitions between the operating states SA, SB, SC. In the example, the following state transitions are defined by FSMC:
- T1: SB → SA
- T2: SA → SB
- T3: SC → SB
- T4: SA → SC

The various configurations CAC, CBC, CCC defined how the function units need to be connected (arranged) to perform the functions in accordance with the respective operating state. In other words, when a trigger event is received which causes the finite state machine to switch from a first operating state into a second operating state, the firmware ensures that the arrangement of the function units inside the respective container object are rearranged in accordance with the configuration associated with the second operating state.

Turning back now to FIG. 1, in response to the trigger event 211t, the execution engine 130 switches 1200, within a single control loop cycle, from the first operating state A to the second operating state B by modifying the arrangement of one or more function unit instances 133a, 133b associated with the first operating state A into a modified arrangement of one or more function unit instances 133c associated with the second operating state B. In the example, the physical device 210 is operated in operating state A associated with the configuration 122A when the trigger event 211t is received. The trigger event 211t is triggering a switch from the current operating state A to operating state B. Operating state B is associated with configuration 122B. The configuration 122B is activated by connecting the input service of function unit 133c to the input service of configuration object 131 (i.e. by creating the connection c1) and by connecting the output service of function unit 133c to the output service of container object 131 (i.e., by creating connection c1'). Simultaneously, the connections c2 and c2' is removed which is equivalent to deactivating configuration 122A. The respective algorithm of function unit 133c is then executed by the execution engine 130 within a time interval which guarantees that no discontinuity is introduced in the control signals which are already applied to the physical device (i.e., the control signals which were generated by the function units 133a, 133b associated with the previous configuration 122A for operating the physical device in operating state A.

The various configurations for a container object can include arrangements of different pluralities function units. This implies that, when switching operating states by activating a corresponding configuration multiple connections between the corresponding function unit (instances) may be created. For example, an output of a first function unit instance may be connected to a corresponding input of a second function unit instance. For example, if operating state B is the current state and the trigger event indicates to the finite state machine that a switch to operating state B is required, a connection between function unit 133a and function unit 133b is created. Further, the connection c2 connecting the input of the container object 131 to the input of the function unit instance 133a, and connection c2' connecting the output of the function unit instance 133b to the output of the container object 131 is created when activating configuration 122A.

In an optional embodiment, the firmware further includes a broker 140. Each function unit may have a plurality of service parameters. Thereby, a service parameter is a variable or is a method of a class defined in a class interface of the respective function unit. Each function unit and its service parameters can now be registered 1050 with the service broker 140. Such registration may be performed for all function units in an initialization step. When a trigger event is received to switch operating states, the configuration corresponding of the future operating state may require that a particular function unit connects to a further function unit. In this embodiment, the particular (requesting) function unit instance may now send 1120 a request for a service delivery by the further function unit to the service broker 140 prior to state switching. If the requested service is available and a plausible connection with the requesting function unit is possible (i.e. plausibility check 1140: YES), the requesting function unit receives 1160 from the service broker a service address of the further function unit. The service address is used by the requesting function unit instance to establish a connection to the further function unit via the service address. Else (i.e. plausibility check 1140: NO) the requesting function unit receives 1180 a respective error code from the service broker 140.

The container object 131 encapsulates function units (e.g., classes for a PID Controller, a filter, etc.) associated with a particular system task (e.g., axis control of an electrical motor) of the physical device. The container classes are used in the respective application. Function units (classes/abstract data types) can only be used in container units. The function unit instances 133a, 133b, 133c are addressed via the respective container object 131. That is, any service address received from the broker is addressing the corresponding function unit instance via the container object in which the function unit is included. Thereby, parameters of container objects and function unit instances are separately addressable.

FIG. 1B illustrates the optional embodiment with broker 141 and four container objects CA, CB, CC, CD which are communicatively coupled with the broker 141 (double arrows). Each container object of the example includes three function units FA1 to FA3, FB1 to FB3, FC1 to FC3, FD1 to FD3, respectively. For example, if the future operating state includes an arrangement of function units where FA2 requests to connect to FD1, the broker 141 provides the service address of FD2 in CD to FA2 in CA if the connection is plausible (i.e., not violating predefined plausibility rules such as "function unit service input must not connect to function unit service input") and if the requested service parameter of FD2 is available (i.e. not already connected to another function unit instance). Besides the disclosed function of the broker 141 as a service broker it may further function as a message broker for communication which is not time critical. This includes standard object-to-object communication where the broker manages the communication to exchange messages between objects.

The broker 141 has a defined interface type for all objects in the firmware which allows for a flexible coupling of the objects where the coupling is always achieved via communication through the broker rather than by a hard coupled object structure where each object is connected to each potential communication partner object.

It is to be noted that container objects may also be nested objects. That is, a container object may include one or more further container objects which again may include still further container objects. In such an embodiment, the service address of a particular function unit input or output service includes the entire address hierarchy of all superordinate container objects.

In the following description, exemplary implementation scenarios are described in more detail. The examples are only for explanatory purpose and not intended to limit the claimed invention in its scope.

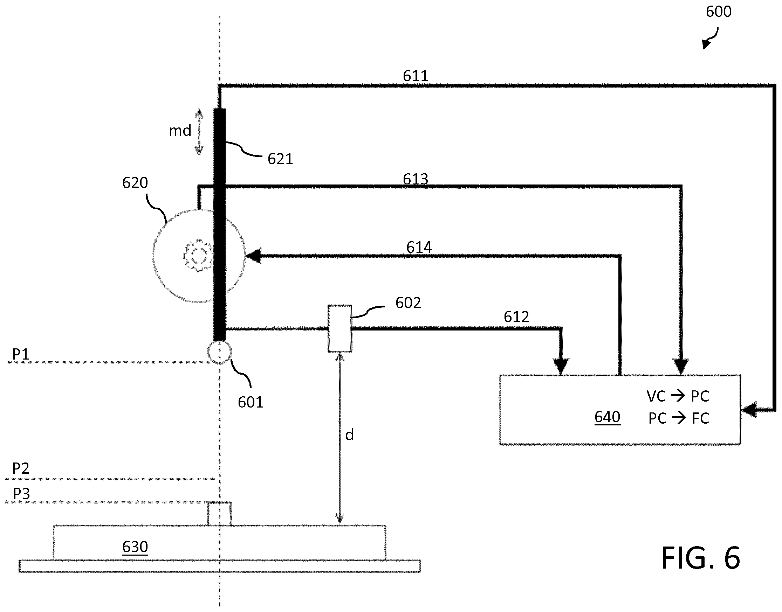

In one embodiment, a computing device comprising the firmware operable in accordance with the disclosed concepts may be used to control a physical device with a servomotor. One or more container objects may encapsulate function units in relation to axis control of the servomotor including at least a velocity control unit and a position control. The first operating state can be a velocity control state and the second operating state can be a position control state. This embodiment is now discussed in more detail with FIG. 6.

FIG. 6 illustrates an application example of high precision control of an electrical servo motor 620 used in a measuring setup 600 for measuring characteristics of a specimen 630 according to an embodiment. The servo motor 620 can drive a rod 621 to perform up- and down-movements md. The rod 621 needs to be moved to make a contact with the specimen 630 for measuring characteristics of the specimen. However, it has to be avoided that the rod is bumping onto the specimen in a way that it might damage the specimen. Therefore, the measuring setup makes use of various sensors whose signals reflect the current operating state of the motor 620. At the bottom of the rod 621 a force sensor 601 is mounted at the lower tip of the rod to provide a force signal 611 to the motor controller 640. As long as no contact is made between the specimen and the force sensor the measured force value is zero. The moment a contact is made, the measured force value increases.

Further, a distance sensor 602 is coupled with the rod 621 in such a way that the distance d between the distance sensor 602 and the specimen can be measured. Thereby, the distance sensor 602 can be mounted such that the position of the sensor 602 corresponds to the position of the lower tip of the rod 621 and the distance between the sensor and the specimen is the same as the distance between the rod tip and the specimen. However, different mounting positions for the distances sensor 602 and can be taken into account if the respective offsets are known. The distance signal 612 provided by the distance sensor 602 is also provided to the motor controller 640.

The motor 620 itself can provide information about its current operating state to the motor controller 640 via the encoder signal 613. The encoder signal 613 can, for example, provide the current rotational speed of the motor, the current position of the motor, etc.

The motor controller 640 implements the firmware as disclosed herein. In the example, the motor controller has a container object which can switch between three configurations: velocity control VC, position control PC, and force control FC. The finite state machine of the container object implements a transition from velocity control to position control (VC → PC), and a transition from position control to force control (PC → FC). As long as the distance sensor signal 612 indicates that the rod tip has a sufficiently large distance (above a predefined first threshold) from the specimen, the motor 620 can be operated in the speed control mode so that the rod tip quickly approaches the specimen. In the VC mode the controller 640 provides control signals 614 to the motor which instruct the motor 620 to move at a given speed as specified in the control signal 614. The VC mode control signal is composed based on the results of the computations performed by the algorithms of the function unit instances arranged in the VC configuration. In the figure, the VC mode is indicated as the first phase P1 during which the velocity control configuration is active. The motor controller 640 continuously receives distance values from the distance sensor to launch a trigger event when the distance falls below the predefined first threshold. For computing the control signal 614 the respective function unit instances may also process the force and encoder signals received from the corresponding sensors. The trigger event causes the controller to activate the position control configuration with the respective function unit instances for controlling the motor movement not any longer via a speed value but rather based on its current position. In other words, the motor 620 is switched from the operating state associated with VC to the operating state associated with PC within a single control loop (i.e., the PC mode becomes effective once the current motor step is finished). In the PC operating mode a much higher precision for the motor control is achieved and the motor is now moving slower towards a particular position than in the VC mode. The control signal 614 in the PC mode is computed by the algorithms of the function unit instances arranged in the position control configuration. Again, all received sensor signals may provide inputs to such computations. In the example, the position control phase P2 occurs between the predefined first threshold and the point where the force sensor 601 makes contact with the specimen. The trigger event which initiates the switch from PC to FC mode in accordance with the finite state machine of the respective container object may be fired when the force sensor value becomes greater than zero, thus indicating that the contact was made. Alternatively, the trigger event may be fired when the distance value exceeds a second predefined threshold which indicates that the specimen has been reached by the rod tip. The motor control which is applied in the FC mode can be even more precise than in the PC mode. The control signal is now computed by the algorithms of the function unit instances arranged in the force control configuration of the container object.

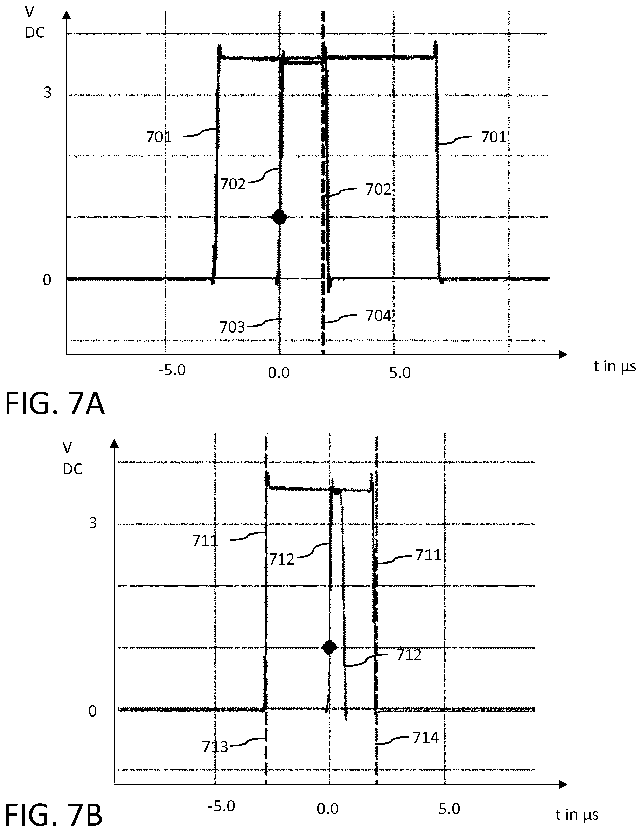

FIGs. 7A, 7B illustrate measurement curves illustrating the real-time behavior of the motor controller 640 in FIG. 6 when operated according to an embodiment. In FIG. 7A, curve 701 shows the time interval including the servo loop for sending a servo motor command, and including the interval 702 for the state switch. The servo motor command in the example is a rectangular shaped voltage pulse have a duration of "the servo loop" and having start/stop edges. A servo loop is used as part of the basic method of determining the motor command output. As known by a person skilled in the field of servo motor control, the function of the servo loop is to match as closely as possible the commanded position, which comes from a trajectory generator, and the actual motor position. The interval for the servo loop needs to be as short as possible for the scenario in FIG. 6 and typically has a length below 50 µs. In the example of FIG. 7A, the interval covered by the servo loop 701 is only about 10 µs. Curve 702 shows the time interval which is needed for a state switch in the scenario of FIG. 6. This time interval is the length of a voltage pulse of two digital pins to measure the servo-loop and the switch of configurations. This includes the computation by the algorithms of the various function unit instances of the respective container object(s) for a PID controller. As can be seen from FIG. 7A, the interval [703, 704] for the state switch is only about 2 µs long. The state switch can therefore easily be executed within the single control loop shown in FIG. 7A. FIG. 7B illustrates that even shorter switch intervals can be achieved according to the disclosed firmware architecture. In FIG. 7B, curve 711 illustrates an even shorter control loop where the interval [713, 714] is only about 5 µs. Yet, the time interval for switching the operating state illustrated by the spike of curve 712 is only about 1 µs and fits well into the available time interval of the control loop.

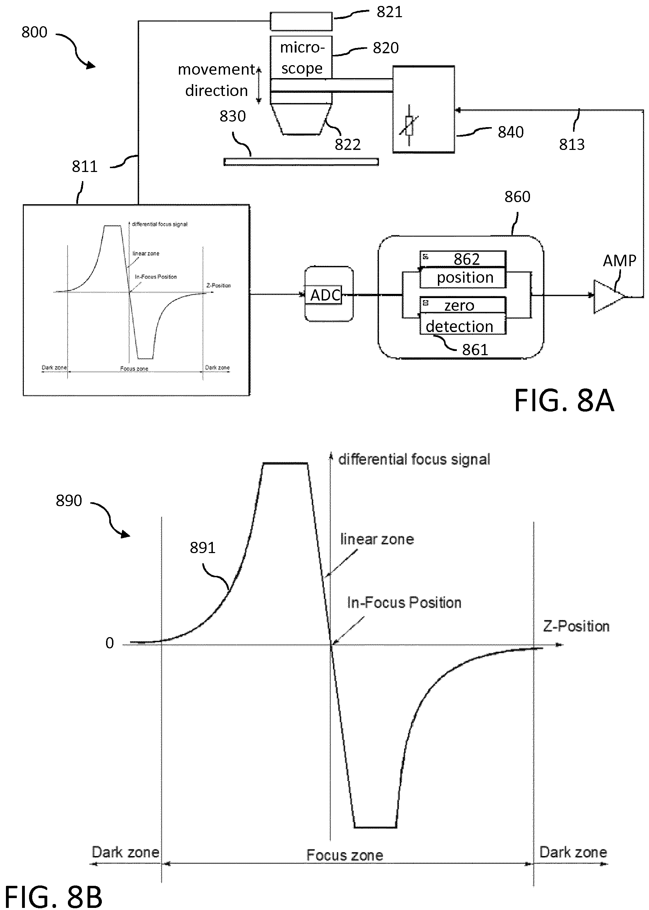

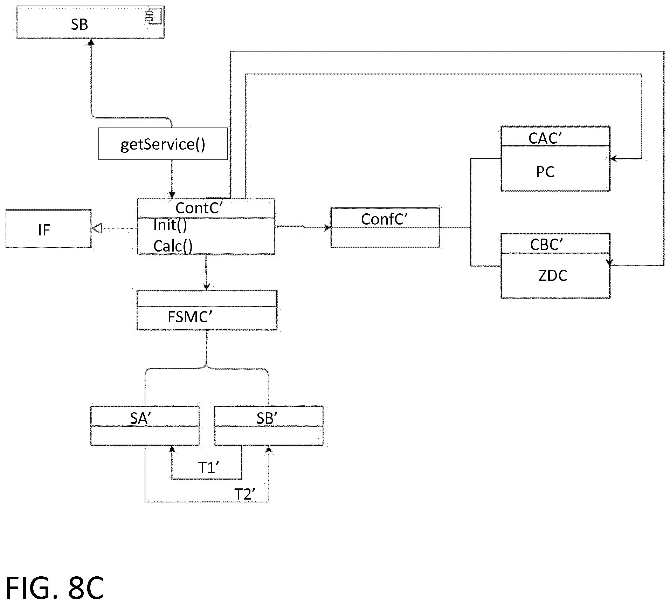

FIGs. 8A, 8B, 8C illustrate a further application example of high precision control of a microscope 820 according to an embodiment. FIG. 8A illustrates the setup 800 for a microscope which uses a PZT tube scanner often used in scanning microscopy applications. PZT tubes make use of the d31 piezo effect. When voltage is applied, the tube shrinks radially and axially, proportional with the voltage. By segmenting the tube axially, multi-axis motion is feasible and scanning is possible. The sample 830 to be scanned is illustrated underneath the microscope 820. To focus, the PZT tube is used to move the microscope lenses up or down (movement direction). A piezo control circuit 840 is used to control the PZT tube. The analogue input signal 813 for the controller 840 is received from an amplifier AMP which converts the digital control output of the axis control container object 860 into the control signal 813.

The controller 840 controls the PZT tube to ensure autofocusing of the microscope. The goal of autofocusing is to position the one-axis piezo stage so that the analog input signal 813 of the controller 840 is kept on a constant particular value. Normally this value is zero. The analog input signal 813, for example, results from a differential focus signal 811 from the microscope (or the like) which is received from an external sensor 821. The digital input for the container object 860 is received from an analogue-to-digital converter ADC which converts the analogue differential focus signal 811 into a digital signal which can be processed by the function units 861, 862 of the container object 860.

Autofocusing is a two-step process:
1. Identifying the focus position, i.e. finding the position of the stage on which the analog input has the value zero (zero detection control). The zero detection control mode is associated with a respective function unit instance 861 of the corresponding container object 860 of the control firmware.
2. Keeping the focus position, i.e. control the stage to keep the analog input signal at the zero value (position control). The position control mode is associated with a further function unit instance 862 of the container object 860.

The state switch mechanism is now explained in the context of FIG. 8B illustrating the differential focus signal 891 in dependence of the Z-position of the microscope optics, and in the context pf FIG. 8C illustrating a class diagram with finite state machine for axis control of the microscope. FIG. 8C uses similar representations as FIG. 5 and, therefore, similar reference numbers are used. In the example of FIGs. 8*, the trigger events for switching between the position control and zero detection control states are launched by the finite state machine FSMC' itself.
(a) While the microscope is initially outside the focus zone (i.e., operation in any of the dark zones) the microscope is in the zero detection control operating state SB'. That is the corresponding configuration CBC' for zero detection control ZDC is activated in the container object (class ContC') mode and the differential focus signal 891 is checked accordingly by the function unit 861. If it is positive (left hand part of signal 891), it implies that, in relation to the current position, the zero-cross point (In-Focus Position) is towards the positive Z direction. In this case, the controller moves the stage 822 (cf. FIG. 8A) of the microscope towards the positive direction. Otherwise, it is moved to the negative direction.
(b) While the stage is moving, the differential focus signal is sampled at each servo-loop.
c) When the zero line (cf. "0" in FIG. 8B) gets crossed, the position of the stage at this moment is very close to the In-Focus Position.
d) The target position is updated at each servo-loop and the voltage difference tends to be zero after a period of time. The voltage difference is integrated in the above closed control process which does not stop until a predefined time interval for autofocusing has lapsed.
e) After autofocusing is finished, the control mode is switched to normal position servo control (operating state SA' for the position control mode). That is, the configuration CAC' for the position control mode PC is activated in the respective container object 860. In other words, when the finite state machine FSMC' detects a voltage difference of zero in the differential focus signal it launches the respective trigger event to switch the operating state to position control SA'. The trigger event causes the finite state machine to switch to the position control mode by activating the corresponding configuration CAC' in the container object.
f) The position of the stage is now kept until a further trigger event is detected which indicates to switch back to the zero detection control mode SB' by activating the respective configuration CBC' in the container object. The further trigger event is launched when the microscope is running out of the focus position which results in a differential focus signal different from 0. For example, threshold values ΔV around the 0 V value (i.e., +/- ΔV) can be predefined which indicate that the microscope has left the In-Focus position. Once the differential focus signal exceeds any of the predefined threshold values, the further trigger event is launched by the finite state machine FSMC' and the container object activates the zero detection control configuration CBC'.

Advantageously, the differential focus signal has only one zero-crossing point. The zones left and right to the Focus zone are called the Dark zones. In the Dark zones the differential focus signal 891 is very weak. Nevertheless, the In-focus position can also be successfully identified, if the differential signal level (including the noise) has no zero-crossing and is larger than the resolution (0.3mV) of the analog input (ADC) on the controller with the container object 860.

The above autofocusing algorithm illustrates that the effective control of switching operating states of a physical device may only require a single input parameter (e.g. the differential focus signal) on which basis the finite state machines of one or more container objects can launch respective trigger events to initiate the activation of the corresponding configurations.

It is to be noted that the above discussed example scenarios are only exemplary. The disclosed flexible configuration approach for switching operating states of a physical device with a single control loop cycle can also be applied by a skilled person to other application areas such as robotics (e.g., different operating states of a robot can be associated with respective configurations), autonomous cars, but even to artificial intelligence applications where the states are defined by neural networks and the state switch affects the activation or deactivation of nodes in the neural network dependent on the corresponding configurations.

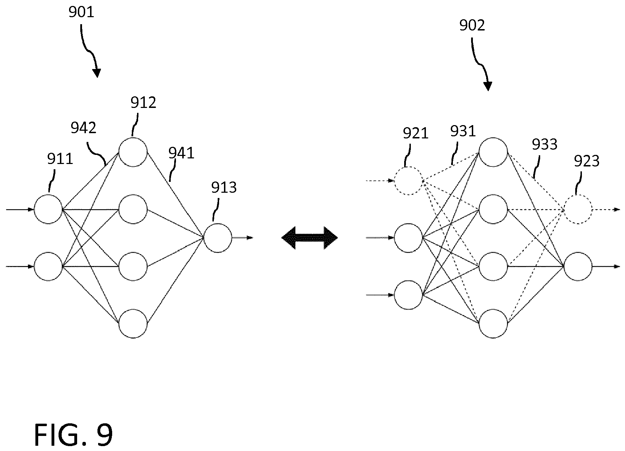

FIG. 9 illustrates an example scenario with a neural network. A neural network 901, 902, as used herein, is an artificial neural network for solving artificial intelligence problems, composed of artificial neurons or nodes 911-913, 921, 923. The nodes are shown as circles in FIG. 9. The initial state of the neural network 901, i.e., a first operating state of the physical device implementing the neural net, is shown on the left hand of the figure. On the right hand, another operating state 902 of the neural network is shown where additional nodes 921, 923 (dashed circles) were added. The connections of the neurons 941, 942, 933, 931 are modeled as weights. A positive weight reflects an excitatory connection, while negative values mean inhibitory connections. All inputs are modified by a weight and summed. This activity is referred as a linear combination. Finally, an activation function controls the amplitude of the output. For example, an acceptable range of output is usually between 0 and 1, or it could be -1 and 1. Unlike von Neumann model computations, artificial neural networks do not separate memory and processing and operate via the flow of signals through the net connections, somewhat akin to biological networks.

Such artificial networks may be used for predictive modeling, adaptive control and applications where they can be trained via a dataset. Self-learning resulting from experience can occur within networks, which can derive conclusions from a complex and seemingly unrelated set of information. A person skilled in the field of artificial intelligence can apply the disclosed invention to control multiple operating states of a system operated by using a neural network.

The operating states 901, 902 of the system can be described by respective configurations of the neural network which can be used to train and modify the neural network. The finite state machine of a respective container object can be used to initiate transitions between the corresponding states. This may include, for example: creating new connection(s) (e.g., adding dashed connections of operating state 902) when switching from state 901 to state 902; clearing connection(s) (e.g., removing dashed connections when switching from state 902 to state 901); changing the weight of the neurons; adjusting the thresholds of the neurons if they have thresholds; adding or deleting of neurons (e.g., nodes 921, 923); and modifying the activation, propagation or output function of the neural network.

A number of embodiments have been described. Nevertheless, it will be understood that various modifications may be made without departing from the scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

Embodiments of the invention can be implemented in digital electronic circuitry, or in computer hardware, firmware, software, or in combinations of them. The invention can be implemented as a computer program product, i.e., a computer program tangibly embodied in an information carrier, e.g., in a machine-readable storage device, for execution by, or to control the operation of, data processing apparatus, e.g., a programmable processor, a computer, or multiple computers. A computer program can be written in any form of programming language, including compiled or interpreted languages, and it can be deployed in any form, including as a standalone program or as a module, component, subroutine, or other unit suitable for use in a computing environment. A computer program can be deployed to be executed on one computer or on multiple computers at one site or distributed across multiple sites and interconnected by a communication network.

Method steps of the invention can be performed by one or more programmable processors executing a computer program to perform functions of the invention by operating on input data and generating output. Method steps can also be performed by, and apparatus of the invention can be implemented as, special purpose logic circuitry, e.g., an FPGA (field programmable gate array) or an ASIC (application-specific integrated circuit).

Processors suitable for the execution of a computer program include, by way of example, both general and special purpose microprocessors, and any one or more processors of any kind of digital computing device. Generally, a processor will receive instructions and data from a read-only memory or a random access memory or both. The essential elements of a computer are at least one processor for executing instructions and one or more memory devices for storing instructions and data. Generally, a computing device will also include, or be operatively coupled to receive data from or transfer data to, or both, one or more mass storage devices for storing data, e.g., magnetic, magneto-optical disks, or optical disks. Such storage devices may also provisioned on demand and be accessible through the Internet (Cloud Computing). Information carriers suitable for embodying computer program instructions and data include all forms of non-volatile memory, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory can be supplemented by, or incorporated in special purpose logic circuitry.

To provide for interaction with a user, the invention can be implemented on a computing device coupled with a display device, e.g., a cathode ray tube (CRT) or liquid crystal display (LCD) monitor, for displaying information to the user and an input device such as a keyboard, touchscreen or touchpad, a pointing device, e.g., a mouse or a trackball, by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input.

The invention can be implemented in a computing device which is communicatively coupled with a back-end component, e.g., a data server, or a device that includes a middleware component, e.g., an application server, or that includes a front-end component, e.g., a client computer having a graphical user interface or a Web browser through which a user can interact with an implementation of the invention, or any combination of such back-end, middleware, or front-end components. The components of the system can be interconnected by any form or medium of digital data communication, e.g., a communication network. Examples of communication networks include a local area network (LAN) and a wide area network (WAN), e.g., the Internet or wireless LAN or telecommunication networks.

## Claims

**1.** A computer-implemented method (1000) for switching operating states of a physical device (210), the transitions (122t) between a plurality of operating states (A, B) of the physical device being controlled by a finite state machine implemented by a container object (131), the container object further including a plurality of function units and configurations (122A, 122B) wherein each configuration defines a particular arrangement of function units (133a, 133b, 133c) to perform functions in accordance with a particular operating state (A, B) associated with the respective configuration (122A, 122B), the method comprising:
receiving (1100) a trigger event (211t) to switch from a first operating state (A) into a second operating state (B);
switching (1200), within a single control loop cycle, from the first operating state to the second operating state by modifying the arrangement of one or more function unit instances associated with the first operating state (A) into a modified arrangement of one or more function unit instances associated with the second operating state (B) in that:
a first connection (c1) to a particular function unit instance (133c) is created if the configuration (122B) corresponding to the second operating state (B) includes the first connection (c1) and the configuration (122A) corresponding to the first operating state (A) does not include the first connection, and
a second connection (c2) to a particular function unit (133a) is removed if the configuration (122A) corresponding to the first operating state (A) includes the second connection (c2) and the configuration (122B) corresponding to the second operating state (B) does not include the second connection.

**2.** The method of claim 1, wherein the container object (131) encapsulates function units associated with a particular system task of the physical device, and the function units (133a, 133b, 133c) are addressed via the respective container object (131).

**3.** The method of any of the previous claims, wherein creating the first connection to a particular function unit instance comprises any one of the following:
connecting an output of a further function unit instance to a corresponding input of the particular function unit instance;
connecting an output of the particular function unit instance to a corresponding input of a further function unit instance;
connecting an input of the container object to a corresponding input of the particular function unit instance; and
connecting an output of the particular function unit instance to a corresponding output of the container object.

**5.** The method of any of the previous claims, wherein the container object comprises a configuration set with its function unit instances being instantiated from a library (120) of classes or abstract data types.

**6.** The method of any of the previous claims, wherein the container object is a nested object comprising at least a further container object.

**7.** The method of any of the previous claims, wherein the container object is connected to an input container object accessing respective hardware components to read input data for the container object, and wherein the container object is further connected to an output container object accessing the physical device hardware to provide control data to the physical device.

**8.** The method of any of the previous claims, wherein each function unit has a plurality of service parameters, a service parameter being a variable or a method of a class defined in a class interface, with each function unit and its service parameters being registered (1050) with a service broker, the method further comprising:
prior to switching (1200), sending (1120) from a requesting function unit to the service broker, a request for a service delivery by a further function unit;
if the requested service is available and a plausible connection with the requesting function unit is possible, receiving (1160) by the requesting function unit from the service broker a service address of the further function unit and establishing a connection between the requesting function unit and the further function unit via the service address,
else receiving (1180) by the requesting function unit from the service broker a respective error code.

**9.** The method of any of the previous claims, wherein the physical device is a servomotor and the container object encapsulates function units in relation to axis control of the servomotor including at least a velocity control unit and a position control, the first operating state being a velocity control state and the second operating state being a position control state.

**10.** A computer program product comprising instructions that, when loaded into a memory of a physical device controller and executed by at least one processor of the controller, execute the method steps of the computer-implemented method according to any one of the previous claims.

**11.** A firmware (100) for switching operating states of a physical device (210), the firmware comprising:
a library (120) of classes or abstract data types comprising a plurality of container units (121) with configurations (122) and function units (123), wherein an instance (131) of a particular container unit, the instance referred to as container object, includes a plurality of function unit Instances (133a, 133b, 133c) and configurations (122A, 122B) and implements a finite state machine configured to control the transitions (122t) between a plurality of operating states (A, B) of the physical device (210), wherein each configuration (122A, 122B) corresponds to a respective operating state (A, B) and defines a particular arrangement of function unit instances (133a, 133b, 133c) to perform functions in accordance with the respective operating state;
an interface (110) configured to receive a trigger event (211t) to switch from a first operating state (A) into a second operating state (B);
an execution engine (130) configured to switch, within a single control loop cycle, from the first operating state (A) to the second operating state (B) by modifying the arrangement of one or more function unit instances (133a, 133b) associated with the first operating state (A) into a modified arrangement of one or more function unit instances (133c) associated with the second operating state (B) in that:
a first connection (c1) to a particular function unit instance (133c) is created if the configuration (122B) corresponding to the second operating state (B) includes the first connection (c1) and the configuration (122A) corresponding to the first operating state (A) does not include the first connection (c1), and
a second connection (c2) to a particular function unit instance (133a) is removed if the configuration (122A) corresponding to the first operating state (A) includes the second connection (c2) and the configuration (122B) corresponding to the second operating state (B) does not include the second connection (c2).

**12.** The firmware of claim 11, wherein the execution engine (130) is further configured to create the first connection to a particular function unit instance by any one of the following:
connecting an output of a further function unit instance to a corresponding input of the particular function unit instance;
connecting an output of the particular function unit instance to a corresponding input of a further function unit instance;
connecting an input of the container object to a corresponding input of the particular function unit instance; and
connecting an output of the particular function unit instance to a corresponding output of the container object.

**13.** The firmware of claim 11 or 12, wherein the container object is connected to an input container object accessing respective hardware components to read input data for the container object, and wherein the container object is further connected to an output container object accessing the physical device hardware to provide control data to the physical device.

**14.** The firmware of any of the claims 11 to 13, wherein each function unit has a plurality of service parameters, a service parameter being a variable or a method of a class defined in a class interface, with each function unit and its service parameters being registered with a service broker, the execution engine further configured to:
send, prior to switching, from a requesting function unit to the service broker, a request for a service delivery by a further function unit;
if the requested service is available and a plausible connection with the requesting function unit is possible, to receive by the requesting function unit from the service broker a service address of the further function unit, and to establish a connection between the requesting function unit and the further function unit via the service address.

**15.** A computing device comprising the firmware of any of the claims 11 to 14, wherein the physical device is a servomotor and the container object encapsulates function units in relation to axis control of the servomotor including at least a velocity control unit and a position control, the first operating state being a velocity control state and the second operating state being a position control state.
